# EUROPÄISCHE PATENTSCHRIFT

(11) **EP 0 348 621 B1**
(45) Veröffentlichungstag und Bekanntmachung des Hinweises auf die Patenterteilung: **29.12.1993**
(21) Anmeldenummer: 89106990.8
(22) Anmeldetag: 19.04.1989
(51) Int. Cl.: C07F 7/18

(54) **Verfahren zur Herstellung substituierter organyloxysilylfunktioneller, cyclischer Thioharnstoffe und diese Verbindungen**
Process for the preparation of substituted organyloxysilyl-functional cyclic thiourea, and these compounds
Procédé pour la préparation de thiourées cycliques organyloxysilyl fonctionnelles substituées et ces composés

(30) Priorität: 25.06.1988 DE 3821464
(43) Veröffentlichungstag der Anmeldung: 03.01.1990
(73) Patentinhaber: Degussa Aktiengesellschaft, 60311 Frankfurt (DE)
(72) Erfinder: Deschler, Ulrich, Dr., D-6450 Hanau 9 (DE); Kleinschmit, Peter, Dr., D-6450 Hanau 9 (DE)

(56) Entgegenhaltungen:
- EP-A- 0 280 946
- FR-A- 2 092 256
- US-A- 2 938 046

## Beschreibung

Die Erfindung betrifft ein Verfahren zur Herstellung von cyclischen N,N,N′ und N,N,N′,N′-substituierten, organyloxysilylfunktionellen Thioharnstoffen und die so herstellbaren Verbindungen.

Von A. Baigozhin, Zh. Obshch. Khim 43 (1973) 1408 (C.A. 79: 66463r) ist die Umsetzung von Aminopropyltrialkoxysilanen mit Alkylisothiocyanaten bekannt, die zu N,N′-disubstituierten Thioharnstoffen der Formel

(RO)₃Si(CH₂)₃-NH-CS-NH-R' führt,

mit R = Ethyl und R′ = Phenyl, Allyl.

Eine symmetrische N,N′-substituierte Verbindung wird von M.G. Voronkov et al. beschrieben in Zh. Obshch. Khim. 54 (1984) 1098 (C.A. 101: 192031j).

Man erhält sie durch Reaktion von Aminopropyltrialkoxysilanen mit Thioharnstoff ((RO)₃Si-(CH₂)₃-NH-CS-NH-(CH₂)₃-Si(OR)₃).

Eine im weitesten sinne mit den vorliegenden organyloxysilylfunktionellen Thioharnstoffen verwandte Verbindung, nämlich Ethylenthioharnstoff, ist als Vulkanisationsbeschlenniger bekannt.

Aufgabe der Erfindung ist ein Verfahren zur Herstellung von neuen, substituierten trialkoxysilylfunktionellen Thioharnstoffen, das unter Verwendung von zugänglichen Ausgangsverbindungen mit guten Ausbeuten zu den gewünschten Verbindungen führt.

Gegenstand der Erfindung ist ein Verfahren zur Herstellung von cyclischen N,N,N,′ und N,N,N′,N′-substituierten organyloxyfunktionellen Thioharnstoffen,
dadurch gekennzeichnet,
daß man
a) ein Aminopropylsilan der allgemeinen Formel (I) 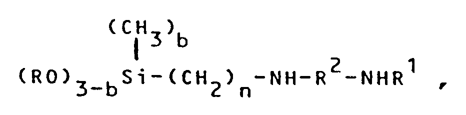 in der bedeuten
   - n:: 1....6, insbesondere n=1,3
   - R:: Alkyl mit 1 bis 6 C-Atomen, Cycloalkyl mit 5 bis 7-Atomen,
   - R¹:: Wasserstoff oder 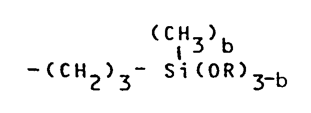
   - R²:: Alkylen mit 1 bis 4 C-Atomen, insbesondere -CH₂-CH₂-, 1,2-Phenylen,
   - b:: 0,1 oder 2, bevorzugt 0,
   in einem organischen Lösungsmittel mit Kohlenstoffdisulfid umsetzt,
b) das ausgefallene, gegebenenfalls abgetrennte, Dithiocarbamat der Formel (II) 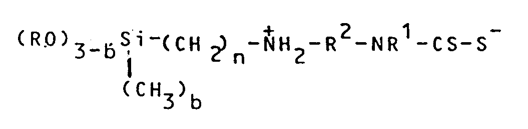 erhitzt, bis kein Schwefelwasserstoff mehr freigesetzt wird, und das entstandene Produkt der allgemeinen Formel (III) 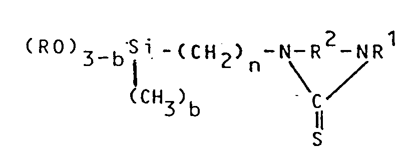 nach an sich bekannten Methoden abtrennt.

Die Herstellung der cyclischen Thioharnstoffe (b=0) erfolgt also nach folgendem Grundschema: 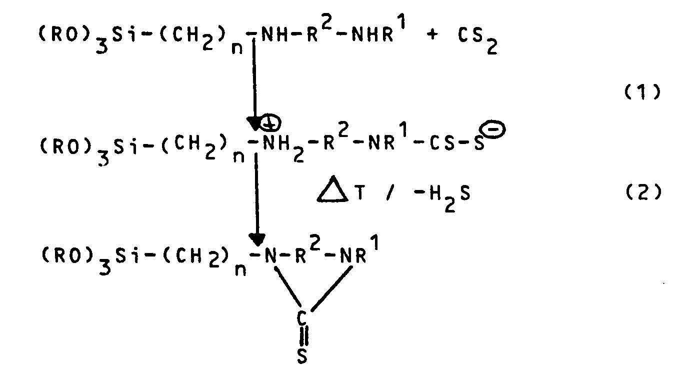
Die Reaktion gemäß Gleichung (1) führt man vorzugsweise in einem inerten, unpolaren, aprotischen Lösungsmittel durch, bevorzugt in THF.

Als Lösungsmittel ebenfalls geeignet sind (halogenierte) Kohlenwasserstoffe wie etwa n-Pentan oder Tetrachlorkohlenstoffe, (cyclische) Ether wie etwa Diethylether, Diethylenglykoldimethylether oder Dioxan sowie deren Mischungen.

Die eingesetzten Diamin-funktionellen Organosilane sind allgemein bekannt oder sind nach bekannten Methoden herstellbar, z. B. durch J.L. Speier et al., J.Org.Chem. 36 (1971) 3120 ff.

Die Reaktionstemperaturen liegen vorzugsweise unterhalb des Siedepunktes des Kohlenstoffdisulfids, insbesondere bei Temperaturen von 0 bis 45 °C. Wegen der Exothermie der Dithiocarbamatbildung erfordert dies eine externe oder interne Kühlung des Reaktionsgemisches nach bekannten Methoden.

Vorteilhafterweise geht man so vor, daß man pro Mol Diaminoorganosilan gemäß Formel (I) 1 bis 1,2 , bevorzugt 1,1 Mol Schwefelkohlenstoff in einem geeigneten organischen Lösungsmittel gelöst vorgelegt und das Silan bei externer Kühlung unter Temperaturkontrolle zutropft.

Gegen Ende der Silanzugabe fällt dann ein Dithiocarbamat gemäß Formel (II) aus. Diese sind ebenfalls Gegenstand der Erfindung.

Um die cyclischen Thioharnstoffe gemäß Formel (III) zu gewinnen, ist eine Isolierung der genannten Dithiocarbamate jedoch nicht notwendig. Die gemäß Gleichung (1) erhaltene Reaktionslösung kann zur Abspaltung von Schwefelwasserstoff direkt thermisch behandelt werden. In diesem Falle sind zur Durchführung der Reaktion nach Gleichung (1) auch polare, aprotische Lösungsmittel wie etwa N,N-Dimethylformamid oder sogar solche polare, protische Lösungsmittel, die eine schnelle Bildung der Dithiocarbamate nicht verhindern, wie etwa Alkohole (insbesondere ROH mit R in der genannten Bedeutung) geeignet.

Vorzugsweise verbindet man mit der Umsetzung gemäß Gleichung (2) das Abdestillieren des Lösungsmittels. Das bedeutet, daß die angewandte Temperatur über dem Siedepunkt des jeweils eingesetzten Lösungsmittels bei Normaldruck liegt, insbesondere im Bereich von 30 bis 140 °C.

Nach dem Entfernen des Lösungsmittels erwärmt man im allgemeinen noch einmal für 0,5 bis 2 h auf 110 °C. Es hat sich als besonders günstig herausgestellt, die Reaktionslösung zum schnelleren Abtreiben des entstandenen Schwefelwasserstoffs während dieses Verfahrensschrittes mit Stickstoff zu durchspülen. Stattdessen kann das vollständige Entfernen des Schwefelwasserstoffs aus dem Reaktionsgemisch aber auch durch Anlegen eines Unterdrucks von z. B. 15 mbar erreicht werden.

Gegenstand der Erfindung sind ebenfalls N,N,N'- und N,N,N'-N'-substituierte cyclische Thioharnstoffe der allgemeinen Formel (III) 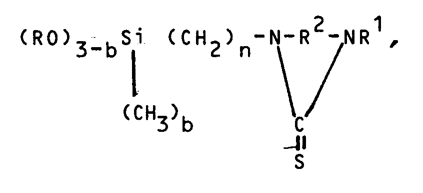
in der n, b, R, R¹ und R² die oben angegebenen Bedeutungen haben.
Diese Verbindungen werden vorteilhaft wegen ihrer vulkanisationsbeschleunigenden Wirkung in Halogenkautschuken eingesetzt.

### I. Cyclische N-(3-Trialkoxysilylpropyl)-thioharnstoffe (Beispiele 1-3):

Allgemeine Herstellungsvorschrift: Pro Mol einzusetzendes Diaminoorganosilan werden 1,1 Mol Schwefelkohlenstoff in 250 ml THF vorgelegt und das Silan unter externer Einkühlung innerhalb von 0,5 h zugetropft. Dabei fällt gegen Ende der Silanzugabe das jeweilige Dithiocarbamat als Zwitterion in Form eines hellgelben Kristallpulvers aus, das jedoch vor der thermischen Schwefelwasserstoffabspaltung nicht eigens isoliert zu werden braucht. Diese thermische Behandlung erfolgt vorteilhaft durch Abdestillieren des Lösungsmittels unter Normaldruck und anschließendes Erwärmen für 1,5 h auf 110 °C, wobei die Reaktionslösung zur schnelleren Entfernung des gebildeten Schwefelwasserstoffs mit Stickstoff durchspült wird.

### Beispiel 1:

### N-(3-Trimethoxysilylpropyl)-N,N′-ethylenthioharnstoff,

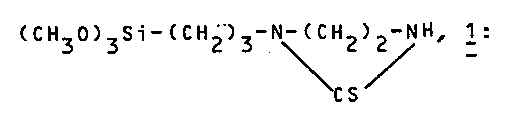

Herstellung aus 111,2 g N-(3-Trimethoxysilylpropyl)ethylendiamin (0,5 Mol) und 41,9 g Schwefelkohlenstoff (0,55 Mol, Überschuß);
Ausbeute: 128,9 g entspr. 97,5 % d. Th.;
gelber, kristalliner Feststoff;
C₉H₂₀N₂O₃SSi (264,420)

| | C (%) | H (%) | N (%) | S (%) |
|---|---|---|---|---|
| ber.: | 40,88 | 7,62 | 10,59 | 12,13 |
| gef.: | 40,2 | 7,7 | 10,1 | 11,7 |

### Beispiel 2:

### N-(3-Triethoxysilylpropyl)-N,N′-ethylenthioharnstoff,

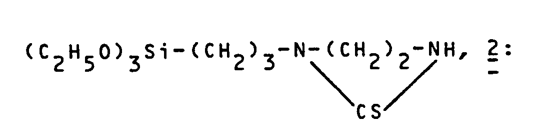

Herstellung aus 365,5 g N-(3-Triethoxysilylpropyl)ethylendiamin (1,38 Mol) und 115,7 g Schwefelkohlenstoff (1,52 Mol, Überschuß);
Ausbeute: 416,5 g entspr. 98,5 % d. Th.;
gelber, kristalliner Feststoff;
C₁₂H₂₆N₂O₃SSi (306,501)

| | C (%) | H (%) | N (%) | S (%) |
|---|---|---|---|---|
| ber.: | 47,03 | 8,55 | 9,14 | 10,46 |
| gef.: | 46,3 | 8,6 | 9,3 | 9,9 |

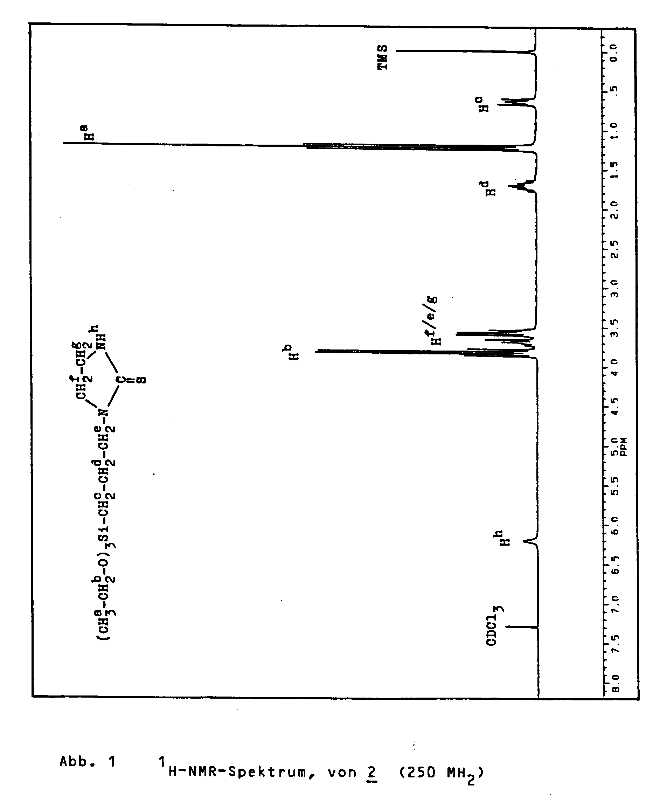

Das ¹H-NMR-Spektrum von 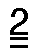 wird in Abbildung 1 wiedergegeben.

### Beispiel 3:

### N-(3-Triethoxysilylpropyl)-N,N′-o-phenylenthioharnstoff,

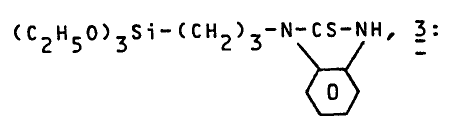

Herstellung aus 109,3 g N-(3-Triethoxysilylpropyl)-o-phenylendiamin (0,35 Mol) und 29,3 g Schwefelkohlenstoff (0,39 Mol, Überschuß);
Ausbeute: 121,9 g entspr. 98,3 % d. Th.;
gelber, kristalliner Feststoff;
C₁₆H₂₆N₂O₃SSi (354,546)

| | C (%) | H (%) | N (%) | S (%) |
|---|---|---|---|---|
| ber.: | 54,20 | 7,39 | 7,90 | 9,04 |
| gef.: | 53,7 | 7,8 | 7,4 | 8,2 |

### II. Cyclische N,N′-Bis(3-trialkoxysilylpropyl)-thioharnstoffe (Beispiele 4, 5):

Allgemeine Herstellungsvorschrift: Die Herstellung erfolgt genau wie unter Abschnitt I. beschrieben mit dem Unterschied, daß anstelle der mono silylpropylsubstituierten Diamine entsprechende N,N′-disilylpropylsubstituierte Amine eingesetzt werden.

### Beispiel 4:

### N,N′-Bis(3-triethoxysilylpropyl)-N,N′-ethylenthioharnstoff,

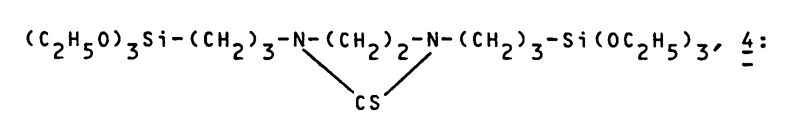

Herstellung aus 117,2 g N,N′-Bis(3-triethoxysilylpropyl)ethylendiamin (0,25 Mol) und 20,9 g Schwefelkohlenstoff (0,28 Mol);
Ausbeute: 121,8 g entspr. 95,4 % d. Th.;
orangebrauner, kristalliner Feststoff;
C₂₁H₄₆N₂O₆SSi₂ (510,843)

| | C (%) | H (%) | N (%) | S (%) |
|---|---|---|---|---|
| ber.: | 49,38 | 9,08 | 5,48 | 6,28 |
| gef.: | 48,7 | 9,4 | 5,3 | 5,7 |

### Beispiel 5:

### N,N′-Bis(3-triethoxysilylpropyl)-N,N′-o-phenylenthioharnstoff,

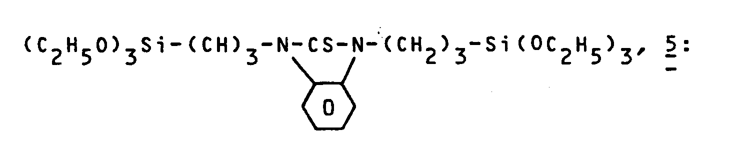

Herstellung aus 77,5 g N,N′-Bis(3-triethoxysilylpropyl)-o-phenylendiamin (15 Mol) und 12,6 g Schwefelkohlenstoff (0,17 Mol);
Ausbeute: 79,4 g entspr. 94,7 % d. Th.;
orangefarbener, kristalliner Feststoff;
C₂₅H₄₆N₂O₆SSi₂ (558,888)

| | C (%) | H (%) | N (%) | S (%) |
|---|---|---|---|---|
| ber.: | 53,73 | 8,30 | 5,01 | 5,74 |
| gef.: | 53,5 | 8,6 | 4,7 | 5,9 |

## Patentansprüche

1. Verfahren zur Herstellung Von cyclischen N,N,N' und N,N,N',N'-substituierten organyloxysilylfunktionellen Thioharnstoffen,
dadurch gekennzeichnet,
daß man
a) ein Aminoalkylsilan der allgemeinen Formel (I) 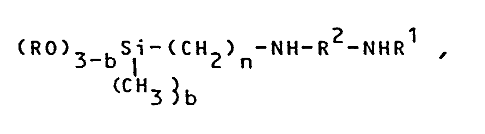 in der bedeuten
n : 1....6, insbesondere n=1,3
R: Alkyl mit 1 bis 6 C-Atomen, Cycloalkyl mit 5 bis 7-Atomen,
R¹: Wasserstoff oder 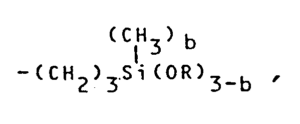
R²: Alkylen mit 1 bis 4 C-Atomen, insbesondere -CH₂-CH₂-, 1,2-Phenylen,
b: 0,1 oder 2,
in einem organischen Lösungsmittel mit Kohlenstoffdisulfid umsetzt,
b) das ausgefallene, gegebenenfalls abgetrennte Dithiocarbamat der Formel (II) 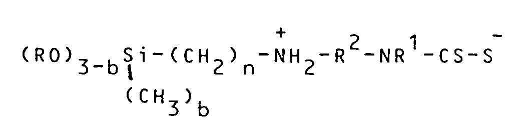 erhitzt, bis kein Schwefelwasserstoff mehr freigesetzt wird, und das entstandene Produkt der allgemeinen Formel (III) 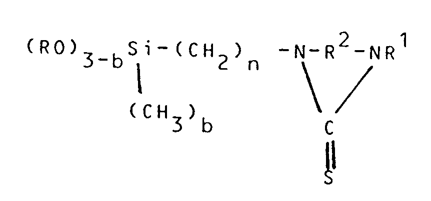 nach an sich bekannten Methoden abtrennt.

2. N,N, N' und N,N, N',N'-substituierte cyclische Thioharnstoffe der allgemeinen Formel (III) 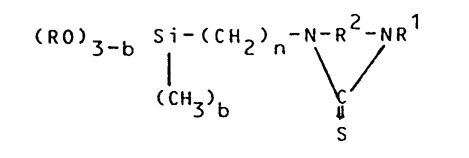 in der R, R¹ und R², b und n die in Anspruch 1 genannten Bedeutungen haben.

## Claims

1. A process for the preparation of cyclic N,N,N'- and N,N,N',N'-substituted organyloxysilyl-functional thioureas, characterised in that
a) an aminoalkyl silane corresponding to the general formula (I) 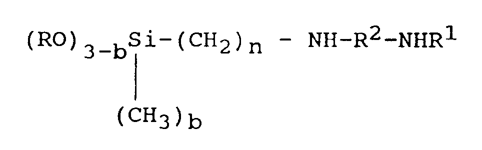 wherein
n: 1....6, in particular n = 1, 3
R: alkyl with 1 to 6 carbon atoms or cycloalkyl with 5 to 7 carbon atoms,
R¹: hydrogen or 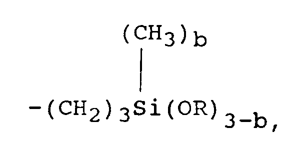
R²: alkylene with 1 to 4 carbon atoms, in particular -CH₂-CH₂- or 1,2-phenylene,
b: 0.1 or 2
is reacted with carbon disulphide in an organic solvent,
b) the precipitated, optionally isolated dithiocarbamate corresponding to formula (II) 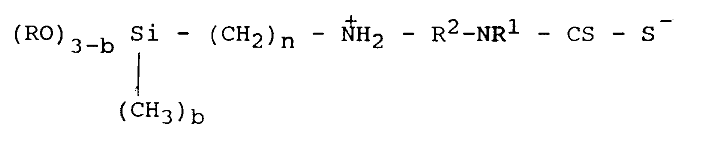 is heated until no more hydrogen sulphide is released, and the resulting product corresponding to the general formula (III) 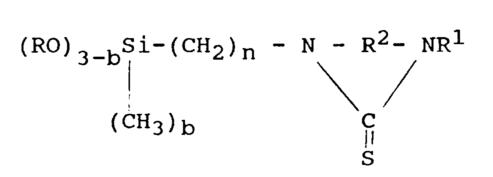 is separated by known methods.

2. N,N,N'- and N,N,N',N'-substituted cyclic thioureas corresponding to the general formula (III) 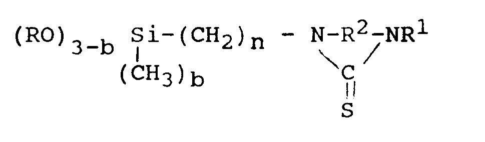 in which R, R¹ and R², b and n have the meanings indicated in claim 1.

## Revendications

1. Procédé de fabrication de thio-urées cycliques substituées N,N,N',N', organyloxysilylfonctionnelles, caractérisé en ce que
a) on fait réagir un aminopropylsilane de formule générale (I) 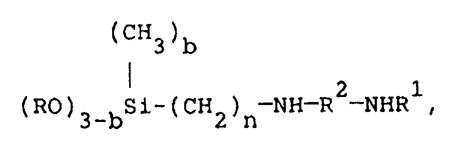 dans laquelle
n : indique 1 .... 6, en particulier n = 1,3
R : indique un alkyle avec de 1 à 6 atomes de C, un cycloalkyle avec de 5 à 7 atomes de C
R¹ : indique un hydrogène ou 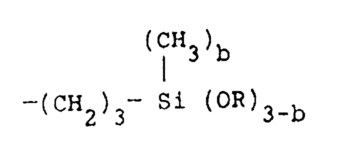
R² : indique un alkylène avec 1 à 4 atomes de C, en particulier -CH₂-CH₂- , 1,2-phénylène,
b : indique 0,1 ou 2, de préférence 0,
dans un solvant organique avec du disulfure de carbone,
b) on chauffe le dithiocarbamate, précipité, éventuellement séparé de formule (II) 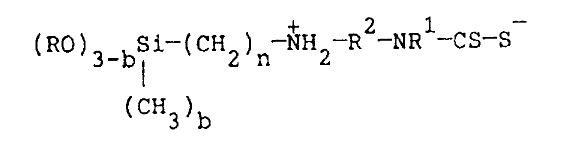 jusqu'à ce que plus d'hydrogène sulfuré ne soit dégagé, et on sépare selon des méthodes connues en soi le produit se formant de formule générale (III)

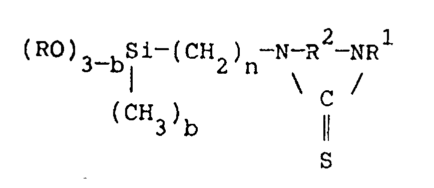

2. Des thio-urées substituées N,N,N' et N,N,N',N' de formule générale (III) 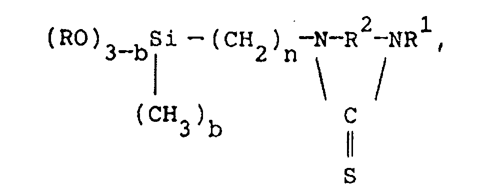 dans laquelle n, b, R, R¹ et R² ont les significations indiquées plus haut.
